**Europäisches Patentamt**

**European Patent Office**

**Office européen des brevets**

(19)

(11) Veröffentlichungsnummer: **0 239 036**
**B1**

(12) **EUROPÄISCHE PATENTSCHRIFT**

(45) Veröffentlichungstag der Patentschrift:
**07.06.89**

(51) Int. Cl.⁴: **B29C 45/00**, C08J 5/00
// B29K67/00, B29K77/00

(21) Anmeldenummer: **87104146.3**

(22) Anmeldetag: **20.03.87**

(54) Verfahren zur Herstellung von Formkörpern aus flüssigkristallinen Polymeren.

(30) Priorität: **22.03.86 DE 3609805**

(43) Veröffentlichungstag der Anmeldung:
**30.09.87 Patentblatt 87/40**

(45) Bekanntmachung des Hinweises auf die Patenterteilung:
**07.06.89 Patentblatt 89/23**

(84) Benannte Vertragsstaaten:
**BE CH DE FR GB IT LI SE**

(56) Entgegenhaltungen:
**EP-A- 0 053 940**
**DD-A- 122 493**
**DE-A- 3 526 727**

(73) Patentinhaber: **BASF Aktiengesellschaft,
Carl-Bosch-Strasse 38, D-6700 Ludwigshafen(DE)**

(72) Erfinder: **Kock, Hans-Jakob, Dr., Benckiserstrasse 63,
D-6700 Ludwigshafen(DE)**
Erfinder: **Seiler, Erhard, Dr., Erpolzheimer Strasse 1,
D-6700 Ludwigshafen(DE)**
Erfinder: **Erhard, Gunter, Dr., Leipzigerstrasse 1,
D-6835 Bruehl(DE)**

## Beschreibung

Die Erfindung betrifft ein Verfahren zur Herstellung von Formkörpern aus flüssig-kristallinen Polymeren nach den Spritzprägeverfahren.

Die thermoplastische Verarbeitung von thermotropen flüssig-kristallinen Polymeren führt zu Werkstoffen mit außergewöhnlichen Eigenschaften, insbesondere hoher Festigkeit und Steifigkeit. Darüber hinaus sind die Formmassen weitgehend resistent gegen organische Lösungsmittel und auch ohne Zusatz von Flammschutzmitteln schwer entflammbar.

Versucht man, flüssig-kristalline Polymere nach dem üblichen Spritzgußverfahren zu verarbeiten, so erhält man infolge der Orientierung der Polymerketten Formkörper mit hoher Anisotropie der mechanischen Eigenschaften.

Der Erfindung lag daher die Aufgabe zugrunde, Formkörper aus flüssig-kristallinen Polymeren mit weitgehend isotropen mechanischen Eigenschaften herzustellen.

Diese Aufgabe wird gelöst, wenn man die flüssig-kristallinen Polymeren nach dem Spritzprägeverfahren verarbeitet.

Das Spritzprägen ist eine für die Verarbeitung von Thermoplasten bekannten Verfahrenstechnik, die beispielsweise in folgenden Publikationen beschrieben ist: I. Wallner, Plastverarbeiter $\underline{6}$, S. 229 (1961), H. Dräger, W. Woebecken "Pressen und Spritzpressen", Hansa-Verlag, München, 1955, sowie in EP-A-56 702.

Bisher wurden nach dem Spritzprägeverfahren nur Polymere aus einer isotropen Phase verarbeitet. Es ist überraschend, daß bei der Verarbeitung von flüssig-kristallinen Polymeren, die eine anisotrope Phase aus steifen Molekülketten aufweisen, durch Spritzprägen Formkörper mit isotropen mechanischen Eigenschaften erhalten werden.

Beim Spritzprägen spritzt man die Thermoplastschmelze bei einer Temperatur, die mindestens 70°C, vorzugsweise 100 bis 120°C über der Glastemperatur des Thermoplasten bzw. mindestens 20°C, vorzugseise 30 bis 40°C über dem Schmelzpunkt teilkristalliner Systeme liegt, so in eine Form mit einer beweglichen Formwand ein, daß die Form nur teilweise, vorzugsweise zu weniger als 98 Vol.%, insbesondere zwischen 90 und 97 Vol.% gefüllt wird.

Dann wird die Form bis zur vollständigen Füllung unter isobaren Bedingungen geschlossen und auf die bewegliche Formwand mindestens solange ein Prägedruck ausgeübt, bis die Temperatur unter die Glastemperatur des Thermoplasten, vorzugsweise auf wenigstens 50°C unter die Glastemperatur abgesunken ist. Bei teilkristallinen Systemen wird der Prägedruck so eingestellt, daß eine druckinduzierte Kristallisation eintritt. Anschließend wird der Prägedruck auf $P_{max}$ erhöht und auf $T<Tg$ abgekühlt.

Durch den Druck, der auf die Formwand ausgeübt wird, verringert sich das Innenvolumen der Form und zwar mindestens um den Betrag der Volumenkontraktion des Thermoplasten beim Abkühlen. Es ist jedoch vorteilhaft, die Form darüber hinausgehend nur teilweise zu füllen. Man kommt dann mit wesentlich geringeren Prägedrücken aus. Der maximale Prägedruck liegt im allgemeinen zwischen 300 und 900 bar, insbesondere zwischen 400 und 700 bar. Die mittlere Abkühlgeschwindigkeit beträgt bevorzugt 10° pro min bis 2° pro sec, insbesondere 1° pro min bis 4° pro sec.

Thermotrope flüssig-kristalline Polymere sind bekannt. Es handelt sich hierbei um voll- oder teilaromatische Polykondensate wie Polyester, Polyesteramide, Polyetherester, Polyestercarbonate, Polyesteramidimide und ähnliche Polymere. Der Begriff "vollaromatisch" bedeutet hierbei, daß jede im Polymeren vorkommende Monomereinheit mit wenigstens einem aromatischen Ring zum Aufbau der Polymerkette beiträgt. Der Begriff "teilaromatisch" bedeutet, daß ein Teil der für die Kette aufbauenden Monomerstrukturen nicht aromatisch, d.h. im allgemeinen aliphatisch (linear oder cyclisch) ist.

Die oben erwähnten Polymerklassen enthalten eine Reihe der für die Erfindung geeigneten flüssig-kristallinen Polymeren, die Auflistung hat aber keinerlei Ausschließlichkeitscharakter; zudem besitzen nicht alle Polymeren der oben aufgeführten Polymerklassen eine flüssig-kristalline Phase.

Die Existenz einer flüssig-kristallinen Phase in der jeweiligen Polymerschmelze und damit die Eignung des Materials zum erfindungsgemäßen Einsatz läßt sich mit Hilfe der Polarisationsmikroskopie nachweisen. Die Methode ist in der DE-AS 25 20 819 ausführlich beschrieben. Zwischen gekreuzten Polarisatoren weisen die Polymerschmelzen, die in einer Schichtdicke von ca. 10 µm zwischen Glasplatten aufgebracht werden, Texturen auf, die mesomorphen Phasen zugeordnet werden können. Eine ausführliche Zusammenstellung der in Frage kommenden Polymeren ist in EP-A 1 340, EP-A 129 372, EP-A 131 846 und EP-A 139 303 enthalten.

Die bevorzugten Polymeren bilden eine flüssig-kristalline Phase unterhalb von 400°C; bevorzugt sind solche, die eine flüssig-kristalline Phase unterhalb von 330°C bilden. Besonders bevorzugt sind vollaromatische Polyester oder vollaromatische Polyesteramide, insbesondere solche mit hoher Teilkristallinität und einer Glastemperatur oberhalb von 120°C. Die Schmelzpunkte dieser flüssig-kristallinen Polymeren liegen zwischen 200 und 350°C, bevorzugt zwischen 250 und 300°C, ihre inhärente Viskosität zwischen 1,0 und 5,5 dl/g (gemessen in Pentafluorphenol bei 60°C, 0,1 gew.%ig), vorzugsweise zwischen 1,5 und 3,5 dl/g.

Die erfindungsgemäß hergestellten Formkörper haben eine hohe Festigkeit und Steifigkeit in nahezu isotroper Verteilung.

## Beispiel 1

Ein vollaromatischer Polyester wird wie in EP-A 139 303, Beispiel 1 beschrieben, hergestellt aus

25 Mol-Teilen Hydrochinon
25 Mol-Teilen 4,4′-Dihydroxybiphenyl
50 Mol-Teilen 2,7-Dihydroxynaphthalin
125 Mol-Teilen 4-Hydroxibenzoesäure
100 Mol-Teilen Terephthalsäure

Die inhärente Viskosität beträgt 3,5 dl/g, gemessen in 0,1 Gew.% Lösung in Pentafluorphenol bei 60°C, die Glastemperatur beträgt 125°C.

Die Polyesterschmelze (anisotroper flüssig-kristalliner Zustand) wird mit einer Temperatur von 320°C in ein temperiertes Spritzprägewerkzeug mit einer beweglichen Werkzeughälfte gefördert, wobei das Werkzeug zu Beginn des Füllvorganges um einen Prägespalt geöffnet ist, der größer ist als der zum Ausgleich der thermischen Kontraktion erforderliche, so daß die Form zu 96 Vol.% gefüllt ist. Nach Teilfüllung des Werkzeughohlraumes wird dann der Prägevorgang eingeleitet.

Der Prägedruck wird so eingestellt, daß die Bewegung des Werkzeugteils der durch die Abkühlung der Schmelze bedingten Kontraktion folgt, wobei immer vollständiger Kontakt der Prägefläche zur Formmasse gewährleistet ist. Der maximal aufgewandte Prägedruck beträgt 600 bar, die Abkühlgeschwindigkeit 2°C pro sec. Nach Abkühlung auf die Temperatur von 70°C wird das Teil entformt.

Zur Prüfung der Isotropie der mechanischen Eigenschaften wurden Rechteckplatten (Bandanguß - seitlich) angefertigt und aus diesen Prüfkörper ge mäß DIN 53 457 hergestellt, wobei die Längsachsen der Prüfkörper parallel bzw. senkrecht zur Angußrichtung orientiert sind. Tabelle 1 gibt die Relation der E-Moduln $E_{||}/E_{\perp}$ wieder. Zum Vergleich werden die Werte für eine im konventionellen Spritzguß gefertigte Platte angegeben.

Tabelle 1

|  | Masse-temperatur | Form-temperatur | $E_{||}/E_{\perp}$ |
|---|---|---|---|
| Spritzguß | 320°C | 80 | 1,28 |
| Spritzprägen | 320°C | 80 | 1,07 |

## Beispiele 2 bis 5

Ein LC-Polyester der in Beispiel 1 beschriebenen Zusammensetzung wird wie in Beispiel 1 verarbeitet. Es werden dabei Massetemperatur und Formtemperatur variiert.

| Beispiel | Masse-temperatur | Form-temperatur | $E_{||}/E_{\perp}$ |
|---|---|---|---|
| 2 | 300 | 80 | 1,05 |
| 3 | 350 | 80 | 1,09 |
| 4 | 320 | 90 | 1,05 |
| 5 | 320 | 100 | 1,04 |

**Patentansprüche**

1. Verfahren zur Herstellung von Formkörpern aus thermoplastischen Polymeren durch Spritzprägen, wobei man eine Thermoplast-Schmelze bei einer Temperatur, die mindestens 70°C über der Glastemperatur des Thermoplasten liegt, in eine Form mit einer beweglichen Formwand so eingespritzt, daß diese nur teilweise gefüllt wird, die Form dann schließt und mindestens solange einen Prägedruck auf die bewegliche Formwand ausübt, bis die Temperatur unter die Glastemperatur des Thermoplasten abgesunken ist, dadurch gekennzeichnet, daß der Thermoplast ein flüssigkristallines Polymer ist.

2. Verfahren nach Anspruch 1, dadurch gekennzeichnet, daß der flüssig-kristalline Thermoplast teilkristallin ist und die Thermoplast-Schmelze bei einer Temperatur, die mindestens 20°C über dem Schmelzpunkt $T_m$ liegt, so verarbeitet wird, daß bei einem Prägedruck $P<P_{max}$ und einer Temperatur $T>T_m$ ($P = 1$ bar) eine druckinduzierte Kristallisation eintritt.

3. Verfahren nach Anspruch 1, dadurch gekennzeichnet, daß der Thermoplast ein vollaromatischer Polyester oder Polyesteramid ist.

## Claims

1. A process for producing a molding from a thermoplastic polymer by injection/compression molding by injecting a thermoplastic melt at a temperature which is not less than 70°C above the glass transition temperature of the thermoplastic into a mold having a mobile mold wall in such a way that the mold is only partly filled, then closing the mold and applying an embossing pressure on the movable mold wall for at least until the temperature has dropped to below the glass transition temperature of the thermoplastic, wherein the thermoplastic is a liquid-crystalline polymer.

2. A process as claimed in claim 1, wherein the liquid-crystalline thermoplastic is partially crystalline and the thermoplastic melt, at a temperature which is not less than 20°C above the melting point $T_m$, is processed in such a way that a pressure-induced crystallization takes place at an embossing pressure $P < P_{max}$ and a temperature $T > T_m$ (P = 1 bar).

3. A process as claimed in claim 1, wherein the thermoplastic is a wholly aromatic polyester or polyester amide.

## Revendications

1. Procédé de fabrication d'objets moulés en polymères thermoplastiques par moulage par transfert, dans lequel une matière thermoplastique fondue est injectée, à une température d'au moins 70°C supérieure à sa température de transition vitreuse, dans un moule comportant une paroi mobile sans remplir celui-ci complètement, ensuite le moule est fermé et on fait agir la pression de moulage sur la paroi mobile jusqu'à ce que la température soit devenue inférieure à la température de transition vitreuse de la matière thermoplastique, caractérisé en ce que la matière thermoplastique est un polymère liquide-cristallin.

2. Procédé suivant la revendication 1, caractérisé en ce que le polymère thermoplastique est partiellement cristallin et la matière thermoplastique fondue est soumise, à une température d'au moins 20°C supérieure au point de fusion $T > T_m$, à un traitement tel que pour une pression de moulage $P < P_{max}$ (P = 1 bar) et une température $T_m$ ait lieu une cristallisation induite par la pression.

3. Procédé suivant la revendication 1, caractérisé en ce que la matière thermoplastique est un polyester ou un polyester-amide entièrement aromatique.